# EUROPEAN PATENT SPECIFICATION

(11) **EP 0 668 975 B1**
(45) Date of publication and mention of the grant of the patent: **06.08.1997**
(21) Application number: 93922117.2
(22) Date of filing: 30.09.1993
(51) Int. Cl.: F16L 5/02

(54) **A VENTILATION DUCT FOR PASSAGE THROUGH A FIRE COMPARTMENT-LIMIT IN A FIRE COMPARTMENT-DIVIDED BUILDING**
BELÜFTUNGSKANAL ZUM DURCHTRITT DURCH EINE FEUERABSCHNITTSBEGRENZUNG IN EINEM IN FEUERABSCHNITTE UNTERTEILTEN BAUWERK
CONDUIT DE VENTILATION DESTINE A TRAVERSER LA LIMITE D'UN COMPARTIMENT DE CONFINEMENT D'INCENDIE DANS UN BATIMENT DIVISE EN COMPARTIMENTS DE CONFINEMENT D'INCENDIE

(30) Priority: 05.10.1992 SE 9202896
(43) Date of publication of application: 30.08.1995
(73) Proprietor: FAGERGREN, Tomas, 117 28 Stockholm (SE)
(72) Inventor: FAGERGREN, Tomas, 117 28 Stockholm (SE)
(74) Representative: Ericsson, Yngve
(86) International application number: SE9300785
(87) International publication number: WO9408167

(56) References cited:
- DE-A- 2 713 689
- US-A- 4 086 736
- US-A- 4 538 389

## Description

The present invention relates to a ventilation system and is concerned with a ventilation duct which permits the passage of the ventilation duct through a fire compartment-limit, for instance through a wall, a floor, a ceiling or another structural part of a fire compartment building.

By fire compartment is meant a part of a building which is separate from the remainder of the building so as to correspond to a given fire resistance grade, which is determined by the nature of the building concerned and the number of stories or floors that it contains. A fire compartment may include for instance a room, a stair well, a boiler room, or group of connected rooms, for instance a group of apartments or offices. The main principle is that activities which are not immediately related to one another shall include different fire compartments and that each fire compartment shall be defined by building structures that prevent the spreading of fire and fire fumes.

A similar level of ambition applies to air treatment plant installed within such a building. One of the most difficult areas of fire protection planning is that of determining safety precautions which will prevent fire and fumes from spreading through ventilation systems. Fire can spread in different ways through a ventilation system. For instance, fire can spread as a result of direct contact between solid or loose combustible material and the flames of a fire, as a result of direct contact with hot metal objects, or as a result of the heat radiated by metal objects, or as a result of being heated to an ignition temperature by the hot fire gases. In order to prevent fire from spreading through a ventilation system, ventilation ducts are either insulated against fire or it is ensured that non-insulated ducts are located at a given distance from combustibles. When passing ventilation ducts through a wall, a floor or a ceiling, it may also be necessary to fit seals and to brace-up the openings formed in the structures to this end. Such ventilation duct throughlets must not weaken or detract from the fire resistance grade of the fire compartment concerned.

It is known to divide structures, duct throughlets and details thereof into a number of fire resistance classes for fire protection purposes, for instances into classes A, B and F followed by a number, e.g. A 15, A 30, B 15, B 30. The class designation A signifies that the part of the building or structure concerned is almost completely of non-combustible material. The class designation B signifies that the part of the building and/or structure concerned includes combustible material that cannot be ignored from a fire resistance aspect. The class designation F signifies that the part of the building and/or the structure concerned does not fulfil requirements regarding maximum temperature increase on the side distal from the fire, but on the other hand decrees that hot fire gases may not leak through this part of the building.

The number following the class designation denotes the actual length of time in minutes that the part of the building and/or structure concerned is able to withstand heat according to standard testing.

When installing a ventilation system in a fire compartment-divided building, it is necessary to form, insulate and seal the ventilation-ducts throughlets in place in the building. This may sometimes create very difficult working conditions. A number of methods of penetrating fire compartment-defining structures are known to the art, these methods differing in accordance with current ordinances and requirements.

A ventilation duct is normally constructed of a sheet metal tubing of rectangular or circular cross-section. The tubing is normally encased in heat insulation of fire resistance class A, although not lower that A 15, under the assumption that the protection distance from combustible material is not fulfilled. The insulating material used is normally mineral wool, and the thickness of the insulation determines the fire resistance class of the ventilation duct.

When a ventilation duct extends through part of a building and is symmetrical on both sides thereof, a relatively long length of insulation is required in order to meet requirements relating to the spontaneous ignition of combustible materials. It is sometimes necessary to reduce the thickness of the insulation in stepped increments and sometimes to insulate the ventilation duct throughout its length in a room or a like space. This latter alternative is particularly applicable in those instances when insulation can only be provided on one side of part of a building. In such cases, the requisite length of insulation on the accessible side of the fire compartment-limit may be twice as long as when the insulation is symmetrically divided on either side of said limit.

By the US-patent 4.538.389 it is also known a fire-break for passing at least one hollow element, such as a pipe, duct or tube through a building wall. For this purpose the fire-break comprises a flange from substantially incombustible material, which is mounted around said hollow element and extending to the wall on at least one side thereof. Such a fire-break is an unit mounted around the hollow element. It means that the flange has to be mounted on the hollow element in position against the wall in the fire compartment-divided building. With other words such a fire-break is only a complementary unit to the hollow element passing through the wall and such an arrangement requires difficult works in place in the building.

It is known to fit a ventilation duct of fire resistance class A with adjustable dampers or butterfly valves of fire resistance class F, with the intention of preventing the spreading of fire through the ventilation system. However, the ventilation ducts must be insulated against fire and temperature in accordance with the aforegoing. The damper units concerned are relatively large, heavy and expensive and incur high installation costs, particularly with regard to the work involved, such as duct fitting, damper fitting and insulating work in various stages.

It is also known to use a ventilation duct of fire resistance class F when passing through a part of a building of fire resistance class A. In this case, a damper of fire resistance class A is mounted in the centre of the throughlet. The function of this valve is to enable the insulation of the throughlet to be drastically reduced or totally omitted. The valve plate is comparatively thick and therefore will generate a lower pressure and a high noise level when open. Manipulation of the valve plate also requires the application of high torque, which presumes the use of a powerful motor with subsequent slower response times. In order to ensure that a valve of this kind will function effectively in an early stage of a fire, it is necessary to provide the fire compartment and/or the duct system with an automatic monitoring facility including smoke and/or heat detectors. The damper is expensive, however, and consequently alternative solutions are sought for in the planning stage.

Known ducts throughlets in fire compartments-walls or in like fire-break defining structures, are assembled and installed in position on site in the building itself.

This procedure is both complicated and time consuming and makes it difficult to obtain a symmetrical insulation and to seal the ventilation duct throughlet in relation to the part of the building concerned when working in confined spaces.

The object of the present invention is to eliminate the aforementioned drawbacks and to enable ventilation ducts to be let through fire compartment walls, floors and ceilings in a more rational manner and with the aid of much less expensive components than with earlier known arrangements. Accordingly, the present invention relates to a ventilation duct for passage through a structural element in a fire compartment-divided building according to claim 1.

The inventive duct unit affords many significant advantages. For instance, it is no longer necessary to assemble and insulate ventilation ducts at the place where they are to be installed, as was earlier the norm. Furthermore, because the duct unit can be fitted with a damper plate, it is possible to reduce the length of insulation required to insulate the duct throughlet. The damper setting can be adjusted by means of a setting device mounted on the duct unit. In practice, the damper function of the duct unit is controlled by smoke or heat detectors installed in the fire compartment or in the duct system.

So that the invention will be more readily understood and further features thereof made apparent, the invention will now be described in more detail with reference to exemplifying embodiments thereof and also with reference to the accompanying drawings, in which
Figure 1 is a delimited sectional view of the duct unit;
Figure 2 is an end view of the duct unit;
Figure 3 is a divided sectional view of the inner and the outer tubular members; and
Figure 4 is a longitudinal view of the duct unit.

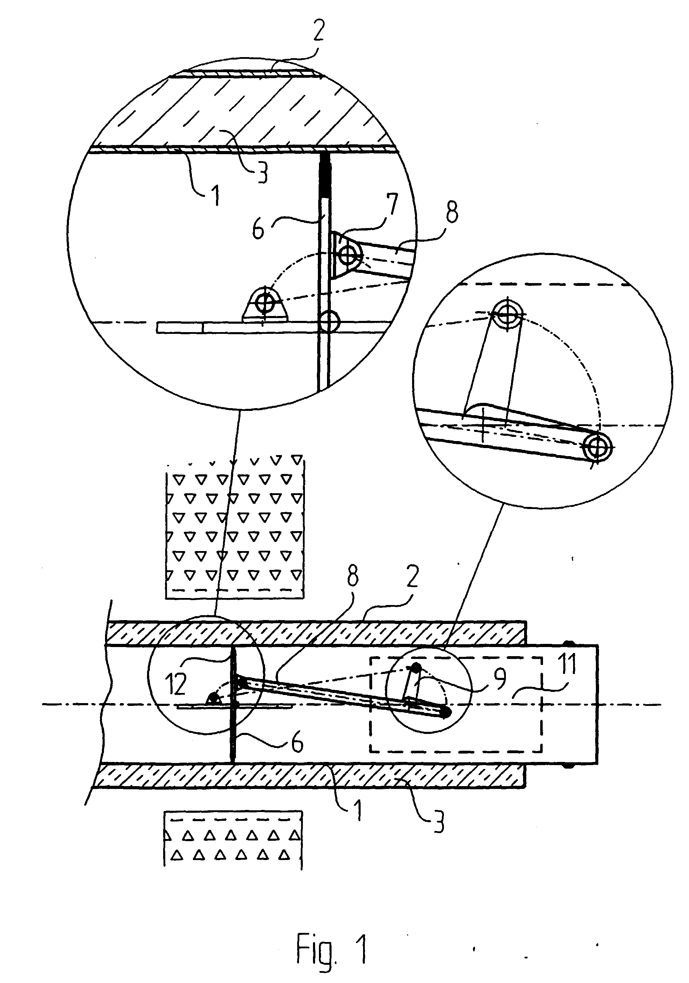

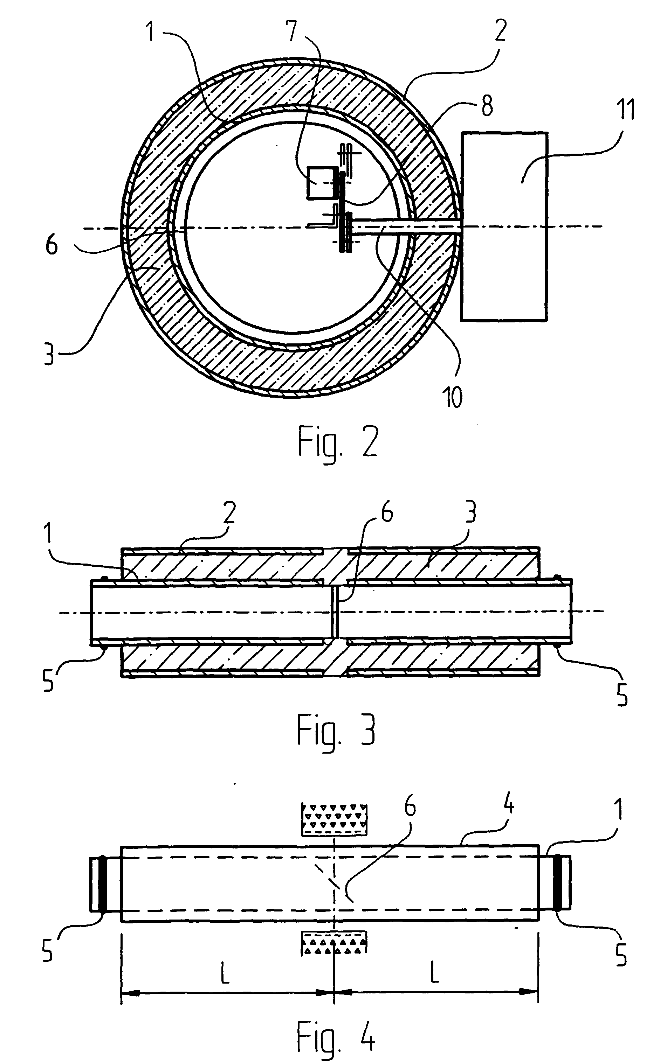

In the exemplifying embodiment of the inventive duct unit shown in Figures 1 and 4, a fireproof material is introduced between an inner tubular member 1 and an outer tubular member 2. This material is originally a moldable mixture of gypsum, perlite and fibre glass, which when solidified forms a solid insulating body 3 of high mechanical strength and good fire protection properties, and enables a reduction in insulation thickness to be achieved. The insulation 3 acts to bind the two tubular members 1, 2 together to form a unit, a so-called chassis 4. The insulation is given a thickness at which the outer surface temperature of the chassis 4 will be so low as to render the selfignition of combustible material in a so-called foreign fire compartment impossible. The length of the insulated chassis shall be proportional to the cross- sectional area of the inner tubular member and therewith correspond to the requisite safety distance from the fire compartment limit, so that radiation heat or hot gases will not cause self-ignition of combustible material in the mouth of the tubular member in a foreign fire compartment. The inner tubular member 1 extends beyond the outer tubular member 2 and the insulation 3 at both ends of the chassis 4. Attached to each end of the inner tubular member is a ring packing or seal 5 which enables the duct unit to be connected to the ventilation ducts of a conventional ventilation system.

In accordance with Figure 1 a damper plate 6 of fire resistance class F is pivotally mounted midway along the length of the inner tubular member 1 of the duct unit. The damper plate 6 has mounted thereon a flange 7 on which one end of a link 8 is pivotally attached. The other end of the link 8 is pivotally attached to an arm 9 which is attached to an output shaft 10 of a drive motor 11, which in turn is connected to the chassis 4 in a conventional manner.

The drive motor 11 and the link mechanism 8, 9 together form a damper plate setting device whose functions are controlled by signals delivered by smoke and/or heat detectors installed in the fire compartment and/or the ventilation duct concerned. A fire resistant sealing ring 12 may be attached to the periphery of the damper plate 6. Alternatively, a sealing material which will expand in the event of fire may be disposed between the damper blade 6 and the chassis 4 and therewith eliminate the risk of leakage of fire gas.

The use of a class-F damper plate allows the plate to be made thinner, which means that no appreciable pressure drop will occur when the damper is open. Furthermore, less work is required to operate the damper and the sealing requirement relative to the part of the building concerned is also reduced. The greatest benefit, however, is thought to lie in the cost savings afforded by a more general application of closable ventilation ducts.

Although the drawings show a duct unit of circular cross-section it will be understood that the duct unit may alternatively have a rectangular cross-section within the concept of the invention, wherein the damper valve may include one or more pivotal plates.

Irrespective of the configuration of the damper, it may be advantageous to paint or surface treat the damper plate 6. Such treatment will reduce heat emission and is therefore able to influence the length of insulation required on the chassis.

According to the concept of this invention, when installing a ventilation system an inventive duct unit will preferably be passed through a fire compartment-limit such as to extend symmetrically on either side thereof. The damper plate 6 will then be located in the fire compartment-limit, as illustrated in Figure 4.

With the intention of preventing the transfer of heat to and from the fire compartment, the chassis 4 may alternatively be constructed with
a. a centrally divided inner tubular member;
b. a centrally divided outer tubular member; and
c. a centrally divided inner and outer tubular member in accordance with the Figure 3 illustration.

In these cases the gap between the divided tubular members is filled with a moldable material which forms part of the insulation 3.

It will be understood that the invention is not restricted to the illustrated and described embodiments thereof and that modifications and changes can be made within the scope of the following Claims.

## Claims

1. A ventilation duct in a passage through a structural element in a fire compartment-divided building in aim to give fire resistance, whereby the ventilation duct is a prefabricated unit which comprises an inner tubular member (1), and an outer tubular member (2) with a fireproof insulation (3) enclosed between the tubular members (1, 2); the insulation (3) originally being a moldable mixture which when solidified has formed a solid insulation (3) and therewith has act to bind the inner and the outer tubular members (1, 2) together to an inseparabe unit, a so-called chassis (4); the chassis having a shape so that the ventilation duct as a unit passes through and is applied in a structural part of the fire compartment building, the ventilation duct is connectable to a conventional ventilation system in both ends and in this respect corresponds to a construction of high fire resistance, and a damper valve of fire resistance class F (6) being pivotally mounted in the inner tubular member (1).

2. A ventilation duct according Claim 1, **characterized** in that the insulation is a mixture of gypsum, perlite and fibre glass.

3. A ventilation duct according to Claim 1 or 2, **characterized** in that the thickness of the insulation (3) is chosen so that in the event of fire the outer surface temperature of the chassis (4) will lie beneath the limit of the fire resistance requirements concerning the self-ignition of combustible material in a so-called foreign fire compartment area.

4. A ventilation duct according to Claim 3, **characterized** in that the length of the insulated chassis (4) is proportional to the area of the inner tubular member and therewith corresponds to the fire resistance that radiation heat or hot fire gases will not induce self-ignition of combustible material in the mouth of the tubular member in a foreign fire compartment area.

5. A ventilation duct according to Claim 4, **characterized** in that the inner tubular member (1) of the chassis (4) is divided at its midway point.

6. A ventilation duct according to Claim 4, **characterized** in that in that the outer tubular member (2) is divided at its midway point.

7. A ventilation duct according to Claim 4, **characterized** in that the inner and the outer tubular members (1, 2) of the chassis (4) are divided at their respective midway points.

8. A ventilation duct according to Claim 1 or Claim 4, **characterized** in that the damper valve (6) is pivotally mounted in the tubular member (1) at a point midway along the length of said member.

9. A ventilation duct according to Claim 1, **characterized** in that a fire resistant sealing ring (12) is attached to the periphery of the damper valve (6).

10. A ventilation duct according to Claim 1, **characterized** in that a heat expandable material is disposed between the damper valve (6) and the chassis (4).

11. A ventilation duct according to Claim 1, **characterized** in that the damper valve setting is adjusted by means of a setting device comprised of a chassis-mounted drive motor (11) and a link mechanism (8, 9).

12. A ventilation duct according to Claim 11, **characterized** in that the setting device (11, 8, 9) is controlled through the influence of smoke and/or heat detectors in a fire compartment area or a ventilation duct.

## Patentansprüche

1. Belüftungskanal in einem Durchgang durch ein Bauelement in einem durch feuersichere Abteile unterteilten Gebäude im Hinblick auf einen Feuerwiderstand, wobei der Belüftungskanal eine vorgefertigte Einheit ist, die eine innere Hülse (1) sowie eine äußere Hülse (2) mit einer feuersicheren Isolierung (3), eingeschlossen zwischen den Hülsen (1, 2); wobei die Isolierung (3) zunächst ein formbares Gemisch ist, das in verfestigtem Zustand eine feste Isolierung (3) bildet und damit die Fähigkeit hat, die innere und die äußere Hülse (1, 2) aneinander zu binden zu einer nicht trennbaren Einheit, einem sogenannten Chassis (4), wobei das Chassis eine solche Gestalt hat, daß der Belüftungskanal als Einheit durch einen konstruktiven Teil des mit feuersicheren Abteilen ausgestatten Gebäudes hindurchführbar und bei diesem anwendbar ist, wobei der Belüftungskanal an seinen beiden Enden anschließbar ist an ein herkömmliches Belüftungssystem und in dieser Beziehung einer Konstruktion hohen Feuerwiderstandes entspricht, femer mit einem Dämpferventil der Feuerwiderstandsklasse F (6), das in der inneren Hülse (1) schwenkbar gelagert ist.

2. Belüftungskanal nach Anspruch 1, dadurch gekennzeichnet, daß die Isolierung ein Gemisch aus Gips, Perlit und Glasfasem besteht.

3. Belüftungskanal nach Anspruch 1 oder 2, dadurch gekennzeichnet, daß die Stärke der Isolierung (3) derart bemessen ist, daß die Temperatur der Außenfläche des Chassis (4) bei Feuer unterhalb des Grenzwertes der Feuerwiderstandsanforderungen liegt, was die Selbstentzündung brennbaren Materiales in einem sogenannten Fremdfeuer-Bereich anbetrifft.

4. Belüftungskanal nach Anspruch 3, dadurch gekennzeichnet, daß die Länge des isolierten Chassis (4) proportional zur Querschnittsfläche der inneren Hülse ist und damit den Feuerwiderstandsanforderungen entspricht, betreffend die erforderlichen Sicherheitsabstände, so daß Hitzestrahlung oder heiße Brandgase keine Selbstentzündung brennbaren Materiales am Einlaß der Hülse in einem Fremdfeuerbereich induziert.

5. Belüftungskanal nach Anspruch 4, dadurch gekennzeichnet, daß die innere Hülse (1) des Chassis (4) in ihrer Mitte unterteilt ist.

6. Belüftungskanal nach Anspruch 4, dadurch gekennzeichnet, daß die äußere Hülse (2) in ihrer Mitte unterteilt ist.

7. Belüftungskanal nach Anspruch 4, dadurch gekennzeichnet, daß die innere und die äußere Hülse (1, 2) des Chassis (4) in ihren Mitten unterteilt sind.

8. Belüftungskanal nach den Ansprüchen 1 oder 4, dadurch gekennzeichnet, daß das Dämpfungsventil (6) in der Hülse (1) an einem mittleren Punkt der Länge der Hülse schwenkbar gelagert ist.

9. Belüftungskanal nach Anspruch 1, dadurch gekennzeichnet, daß ein feuerbeständiger Dichtungsring (12) am Umfang des Dämpfungsventiles (6) befestigt ist.

10. Belüftungskanal nach Anspruch 1, dadurch gekennzeichnet, daß ein wärmedehnbares Material zwischen das Dämpfungsventil (6) und das Chassis (4) zwischengefügt ist.

11. Belüftungskanal nach Anspruch 1, dadurch gekennzeichnet, daß das Einstellen des Dämpfungsventils mittels einer Einstellvorrichtung justiert wird, die einen Chassis-montierten Antriebsmotor (11) sowie einen Lenker (8, 9) umfaßt.

12. Belüftungskanal nach Anspruch 11, dadurch gekennzeichnet, daß die Einstellvorrichtung (11, 8, 9) gesteuert wird durch den Einfluß von Rauch und/oder Wärmedetektoren im Feuerabteilbereich oder in einem Belüftungskanal.

## Revendications

1. Conduit d'aération dans un passage au travers d'un élément structurale dans un bâtiment subdivisé dans des compartiments à l'épreuve du feu, le dit conduit étant une unité comprénant un membre tubulaire intérieure (1) ainsi qu'un membre tubulaire extérieure (2) comprenant une isolation à l'épreuve à feu (3) entourée des membres tubulaires (1, 2), l'isolation (3) initialement format une mixture plastique ce qui, après la solidification, forme une isolation solide (3) et par consequence est capable d'attacher les éléments tubulaire l'un à l'autre à fin de former une unité non-séparable dite chassis (4);
le chassis étant formé de telle façon que le conduit d'aération passe à travers une partie structurale du bâtiment à compartiments à l'épreuve du feu comme unité et est appliqué à celle-ci;
le conduit d'aération étant connectable à un système d'aération conventionelle à les deux bouts, étant conforme à une construction à haute réstistance à feu, ainsi qu'une valve étouffeuse à l'épreuve du feu de classe F (6) étant montée pivotable dans le membre tubulaire intérieure (1).

2. Conduit d'aération selon revendication 1, caractérisé en-ce que l'isolation est une mixture de gypse, de perlite et de fibres de verre.

3. Conduit d'aération selon revendication 1 ou 2, caractérisé en-ce que l'épaisseur de l'isolation est séléctionnée de telle sorte qu'en cas de feu la température de la surface extérieure du chassis (4) soit sous la limite des demandes de résistance à feu concernant l'auto-inflammation de matériel combustible dans une zone dite autre zone à l'épreuve du feu.

4. Conduit d'aération selon revendication 3, caractérisé en-ce que la longeur du chassis isolé (4) est proportionelle à la zone du membre tubulaire intérieur et par consequence correspond aux demandes de réstistance à l'épreuve à feu concernant la distance nécessaire de sécurité de façon que ni la chaleur de radiation ni des gases chauds n'induissent aucune auto-inflammation du matériel combustible dans l'embouchure du membre tubulaire dans une autre zone à l'épreuve du feu.

5. Conduit d'aération selon revendication 4, caractérisé en-ce que le membre tubulaire (1) du chassis est subdivisé à son milieu.

6. Conduit d'aération selon revendiation 4, caracterisé que le membre tubulaire extérieure (2) est subdivisé à son milieu.

7. Conduit d'aération selon revendication 4, caracterisé que le membres tubulaire (1, 2) du chassis (4) sont subdivisés chacun à son milieu.

8. Conduit d'aération selon l'une des revendications 1 ou 4, caractérisé en-ce que la valve étouffeuse est montée pivotable dans le membre tubulaire (1) à un point au milieu de sa longeur.

9. Conduit d'aération selon revendication 1, caractérisé un-ce qu'un anneau d'étanchéité (12) à l'epreuve du feu est fixé à la périphérie de la valve étouffeuse (6).

10. Conduit d'aération selon revendication 1, caractérisé en-ce qu'un matérial expansible à la chaleur est disposé entre la valve étouffeuse (6) et le chassis (4).

11. Conduit d'aération selon revendication 1, caractérisé en-ce que ajustage de la valve étouffeuse se fait à l'aide d'un dispositif comprenant un moteur (11) monté au chassis ainsi qu'un mécansime de connection (8, 9).

12. Conduit d'aération selon revendication 11, caractérisé en-ce que le dispositif ajustage (11, 8, 9) est reglé sous l'influence des detécteurs de fumée at/ou chaleur dans une zone à l'épreuve du feu ou dans un conduit d'aération.
